# EUROPÄISCHE PATENTSCHRIFT

(11) **EP 0 879 270 B1**
(45) Veröffentlichungstag und Bekanntmachung des Hinweises auf die Patenterteilung: **13.10.1999**
(21) Anmeldenummer: 97902248.0
(22) Anmeldetag: 29.01.1997
(51) Int. Cl.: C09J 161/30

(54) **ZWEIKOMPONENTEN-LEIMSYSTEM FÜR DIE HERSTELLUNG VON BRETT-SCHICHTHOLZ**
TWO-COMPONENT GLUE SYSTEM FOR THE PRODUCTION OF LAMINATED WOOD PANELS
SYSTEME DE COLLE A DEUX COMPOSANTS POUR LA PRODUCTION DE PANNEAUX DE BOIS LAMELLE

(30) Priorität: 05.02.1996 DE 19603988
(43) Veröffentlichungstag der Anmeldung: 25.11.1998
(73) Patentinhaber: BASF AKTIENGESELLSCHAFT, 67056 Ludwigshafen (DE)
(72) Erfinder: DORMEYER, Dieter, D-67136 Fussgönheim (DE); EBERT, Joachim, D-67063 Ludwigshafen (DE); EBNER, Manfred, D-67069 Ludwigshafen (DE); PFÜTZE, Eberhard, D-55299 Nackenheim (DE); REINER, Tilman, 67227 Frankenthal (DE); SCHATZ, Hermann, D-67435 Neustadt (DE)
(86) Internationale Anmeldenummer: EP9700377
(87) Internationale Veröffentlichungsnummer: WO9729161

(56) Entgegenhaltungen:
- EP-A- 0 427 058
- DE-A- 3 343 670

## Beschreibung

Die vorliegende Erfindung betrifft ein Zweikomponenten-Leimsystem, das für die Herstellung von Brettschichtholz (BS-Holz) geeignet ist, bestehend aus
a) einer wässerigen Härtermischung (Komponente (a)), enthaltend
   a1) 3 bis 15 Gew.-% einer Bronstedt-Säure
   a2) 20 bis 20 Gew.-% eines mineralischen Füllstoffs
   a3) 2 bis 8 Gew.-% eines Verdickungsmittels
   a4) 40 bis 60 Gew.-% Wasser
   und
b) einem Melaminharz (Komponente (b)).

Weiterhin betrifft die Erfindung Verfahren zur Herstellung von BS-Holz unter Verwendung des Zweikomponenten-Leimsystems sowie das auf diese Weise hergestellte Schichtholz.

Aus verleimten Holzlamellen aufgebautes Brett-Schichtholz (BS-Holz) ist allgemein bekannt (vgl. Informationsdienst Holz, Holzleimbau, Bauen mit Brettschichtholz; Hrsg. Arbeitsgemeinschaft Holz e.V. und Centrale Marketinggesellschaft, ISSN-Nr. 0446-2114). Diese BS-Hölzer werden vorwiegend als tragende Bauteile bei Gewerbe-, Wohn- und öffentlichen Bauten eingesetzt.

Auf diesem anwendungstechnischen Gebiet werden hohe Anforderungen an die mechanische Festigkeit der Bauteile gestellt. Die Verbundfestigkeit muß auch nach vielen Jahren trotz Einwirkung von Witterungseinflüssen wie Temperaturwechsel und Feuchtigkeit ausreichend hoch sein.

Die für die Herstellung tragender Bauteile verwendeten Leimsysteme müssen deshalb umfangreiche Prüfungen durch staatliche Prüfinstitute absolvieren, um die erforderliche bauaufsichtliche Eignungsempfehlung zu erhalten.

Grundlage dieser Prüfung stellt die DIN 68141 in Verbindung mit DIN EN 301 und DIN EN 302 Teil 1 bis 4 dar. Im Rahmen der Eigenüberwachung der Herstellbetriebe ist die Qualität der produzierten Bauteile durch die Delaminierungsprüfung nach DIN EN 386 und DIN EN 391 nachzuweisen.

Neben denn Anforderungen an die Leimsysteme im Hinblick auf die Gebrauchseigenschaften der mit ihnen hergestellten Bauteile werden von den BS-Holz-Herstellern bestimmte Eigenschaften, die die Verarbeitung der Leimsysteme betreffen, gewünscht. Einerseits soll die Antrockenzeit der Leime ausreichend lang sein, damit Holzlamellen, auf die der Leim aufgetragen wurde, innerhalb eines gewissen Zeitraums verarbeitet werden können. Andererseits sollen die verleimten Bauteile bereits möglichst kurze Zeit nach ihrer Herstellung mechanisch belastbar sein. Das setzt voraus, daß der Leim nach dem Zusammenfügen der beleimten Bretter rasch aushärtet.

Es ist in der Fachwelt allgemein bekannt, daß sich für die Herstellung von BS-Holz, das für die Herstellung von tragenden Bauelementen verwendet werden kann, Phenol-Resorcin-Harze eingesetzt werden können. Diese Schichtholzelemente weisen jedoch den Nachteil auf, daß sich die Leimfugen aufgrund der dunklen Eigenfarbe der Phenol-Resorcin-Harze im fertigen Bauteil als schwarzes Linienmuster abzeichnet, was häufig aus Gründen der Ästhetik abgelehnt wird.

Aus dem schwedischen Patent 78 10 982 sind flüssige Härter bekannt. Dabei handelt es sich um wässerige Suspensionen, enthaltend, bezogen auf die wässerige Suspension, 1 bis 25 Gew.% Säure oder säureabspaltende Stoffe, 30 bis 90 Gew.-% Füllmittel, beispielsweise ein mineralisches Füllmittel wie Kaolin, 0,5 bis 10 Gew.-% Verdickungsmittel und 0 bis 50 Gew.-% eines Formaldehydabsorbers. Der Härter weist einen Trockengehalt zwischen 35 und 85 Gewichtsprozenten und eine Viskosität von 2000 bis 12000 mPa•s bei 20°C auf.

Es wird empfohlen, den Härter zur Aushärtung von Harnstoff-Formaldehyd-Harzen einzusetzen. Mit Hilfe dieser Binder-Härter-Systeme hergestelltes BS-Holz weist jedoch nicht die erforderliche Festigkeit auf, insbesondere wenn es in der Außenanwendung eingesetzt wird.

Aufgabe der vorliegenden Erfindung war es deshalb, Zweikomponenten-Leimsysteme für die Herstellung von BS-Holz bereitzustellen, die keine dunklen Leimfugen und die von der Bauindustrie geforderten mechanischen Eigenschaften aufweisen.

Demgemäß wurden die eingangs definierten Zweikomponenten-Leimsysteme bereitgestellt.

Die Härtermischung (Komponente (a)) weist bevorzugt eine Viskosität von 3000 bis 10 000, besonders bevorzugt von 4000 bis 8000 mPa•s auf, bezogen auf eine Meßtemperatur von 20°C und eine Schergeschwindigkeit von 30 s⁻¹.

Bevorzugt enthält die Härtermischung
a1) 5 bis 12, besonders bevorzugt 7 bis 10 Gew.-% einer Bronstedt-Säure
a2) 20 bis 40, besonders bevorzugt 25 bis 35 Gew.-% eines mineralischen Füllstoffs
a3) 2 bis 8, besonders bevorzugt 4 bis 6 Gew.-% eines Verdikkungsmittels
a4) 35 bis 60, besonders bevorzugt 40 bis 55 Gew.-% Wasser.

Geeignete Bronstedt-Säuren sind beispielsweise Mineralsäuren wie Phosphorsäure oder organische Säuren, z.B. Essigsäure, Propionsäure, Oxalsäure oder vor allem Ameisensäure.

Als mineralische Füllstoffe kommen vor allem Kaolin oder andere Alumosilikate mit Schichtstruktur in Betracht.

Als Verdickungsmittel ist Polyvinylalkohol oder teilhydrolysiertes Polyvinylacetat oder deren Gemische geeignet. Polyvinylalkohol ist kommerziell z.B. unter der Bezeichnung Moviol® (Fa. Hoechst) erhältlich. Beim teilhydrolysierten Polyvinylacetat sind mindestens 50 %, bevorzugt 80 % der im Polyvinylacetat ursprünglich vorhandenen Estergruppen hydrolysiert. Die Komponente (c) wird in Mengen von 1 bis 20 Gew.-%, bevorzugt 1 bis 8 Gew.-% verwendet.

Neben dem mineralischen Füllstoff kann die Härtermischung einen organischen Füllstoff enthalten. Dabei handelt es sich im allgemeinen um in Holzleimen üblicherweise enthaltene Füllstoffe, bevorzugt in Form von Fasern, beispielsweise Cellulose oder Holzmehl.

Der organische Füllstoff ist üblicherweise in Mengen von 10 bis 30 Gew.-%, bezogen auf den mineralischen Füllstoff in der Komponente (a), enthalten.

Darüber hinaus enthält die Härtermischung mit Vorteil 1 bis 20, besonders bevorzugt 3 bis 8 Gew.-%, bezogen auf die Gesamtmenge der Komponenten (a1) bis (a4), Resorcin, wenn BS-Holz benötigt wird, das besonders widerstandsfähig gegenüber Feuchteeinwirkung ist.

Weiterhin können noch übliche Hilfs- und Zusatzstoffe wie Entschäumer oder Emulgatoren in einer Menge von bis zu 3 Gew.-%, bezogen auf die Mischungskomponenten (a1) bis (a4) der Härtermischung zugesetzt werden.

Bei der Komponente (b), dem Melaminharz, kommen handelsübliche Harze in Betracht, die beispielsweise aus Ullmanns Encyklopädie der technischen Chemie, 4. Auflage, Band 7, S. 408 und 409 bekannt sind.

Dabei handelt es sich bevorzugt um Melaminharze aus
b1) Melamin
b2) 2,1 bis 8,4, bevorzugt 2,5 bis 4,6 mol Formaldehyd pro Mol Melamin
b3) 0 bis 10, bevorzugt 0 bis 0,5 mol einer weiteren Verbindung, die fähig ist, mit Formaldehyd in einer Polykondensations- oder -additionsreaktion zu reagieren, pro mol Formaldehyd.

Das Melamin (Komponente b1) wird im allgemeinen in fester Form eingesetzt.

Der Formaldehyd (Komponente b2) wird im allgemeinen in Form einer 30 bis 50 gew.-%igen Lösung oder in Form von Paraformaldehyd eingesetzt.

Als Komponenten (b3) kommen vor allem solche in Betracht, die zusammen mit Formaldehyd bei der Herstellung von Aminoplastharzen eingesetzt werden (vgl. Ullmanns Encyklopädie der technischen Chemie, 4. Auflage, Band 7, S. 403 bis 422), also z.B. Harnstoff, Dicyandiamid und Guanamine wie Benzoguanamin und Acetoguanamin. Bisquanamine wie Adipo-, Glutaro- oder Methylolglutarobisguanamin sowie Verbindungen, welche mehrere, z.B. kondensierte Aminotriazin-Kerne enthalten, sind ebenfalls geeignet.

Besonders bevorzugt enthält die Komponente (b)
b1) 15 bis 30 Gew.-% Melamin
b2) 15 bis 30 Gew.-% Formaldehyd
b3) 5 bis 25 Gew.-% Harnstoff, Dicyandiamid und/oder Guanamine.

Die Herstellung der Melaminharze erfolgt vorzugsweise nach den allgemein üblichen Verfahren, die beispielsweise aus Ullmanns Encyklopädie der technischen Chemie, 4. Auflage, Band 7, S. 403 bis 422 bekannt sind.

Die Umsetzung erfolgt üblicherweise in wässeriger Lösung, wobei der Wasseranteil, bezogen auf den Gewichtsanteil der Komponenten (b1) bis (b3) 25 bis 50 Gew.-% ausmacht. Der pH-Wert liegt dabei im allgemeinen bei 7 bis 10, 5 bevorzugt bei 9,0 bis 10,0 und die Reaktionstemperatur bei 60 bis 110, bevorzugt bei 80 bis 110°C.

Im allgemeinen wird die Umsetzung so lange durchgeführt, bis ein Ausgangsmelaminharz bzw. ein elastifiziertes Melaminharz entstanden ist. Diese Umsetzungsprodukte weisen als 60 gew.-%ige wässerige Lösungen bei einer Temperatur von 20°C üblicherweise eine Viskosität von 350 bis 1200, bevorzugt 450 bis 800 mPa•s auf. Unter den genannten Reaktionsbedingungen sind hierfür im allgemeinen Reaktionszeiten von 70 bis 150 min erforderlich.

Die Umsetzung kann beendet werden, indem man die Reaktionsmischungen auf Temperaturen unterhalb 50°C, bevorzugt auf 20 bis 30°C abkühlt.

Im allgemeinen werden wässerige elastifizierte Melaminharze gewünscht, besonders solche mit einem Feststoffgehalt von 50 bis 70 Gew.-%. Sofern die Melaminharze nicht schon unmittelbar nach ihrer Herstellung mit dem gewünschten Feststoffgehalt vorliegen, ist es möglich, den Feststoffgehalt durch Abdestillieren von Wasser, vorzugsweise im Vakuum, oder durch Vermischung mit Wasser zu verändern.

Zur Erhöhung der Elastizität der Leime enthalten die Leime mit Vorteil aliphatische Polyole in Mengen von 5 bis 18, bevorzugt von 9 bis 15 Gew.-%, bezogen auf den Feststoffgehalt der Melaminharze. Diese Polyole können bereits den Ausgangsstoffen, die zur Herstellung der Melaminharze eingesetzt werden, beigemischt werden oder dem fertigen Melaminharz zugesetzt werden. Es kommen vor allem C₂- bis C₂₀-Polyole, bevorzugt Diole wie Ethylenglykol, Diethylenglykol, Dipropylenglykol und Butandiol sowie Triole wie Glycerin in Betracht.

Weiterhin können zur Verbesserung der anwendungstechnischen Eigenschaften der Leime, z.B. der Reaktivität und der Flexibilität der Leime Modifizierungsmittel wie E-Caprolactam und andere Carbonsäureamide in Mengen von 1 bis 7, bevorzugt von 1 bis 3 Gew.-%, bezogen auf den Feststoffgehalt der Melaminharze, den Melaminharzen hinzugefügt werden.

Daneben können die Melaminharze gegebenenfalls bis 20, bevorzugt 9 bis 15 Gew.-%, bezogen auf den Feststoffgehalt, organische Füllmittel enthalten. Hierfür sind die gleichen organischen Füllmittel geeignet, die auch in der Komponente (a) enthalten sein können.

Das erfindungsgemäße Zweikomponenten-Leimsystem kann zur Anwendung kommen, indem man durch Vermischung der Komponenten (a) und (b) eine Leimflotte herstellt und diese zumindest auf eine der beiden Oberflächen aufträgt, die durch den Leim miteinander verbunden werden sollen.

Bevorzugt bestehen die Leimflotten aus den Komponenten (a) und (b) im Gewichtsverhältnis von 0,1:1 bis 0,5:1, besonders bevorzugt 0,2:1 bis 0,4:1.

Die Herstellung der Leimflotten aus den Komponenten (a) und (b) ist unkritisch und erfolgt zweckmäßigerweise durch Einrühren der einen Komponente in die andere.

Ganz besonders bevorzugt sind die Leimflotten wie folgt zusammengesetzt, wobei sich die aufgeführten Bestandteile zu 100 Gew.-Teilen ergänzen:
0,5 bis 2,5 Gew.-Teile Ameisensäure
0,3 bis 1,5 Gew.-Teile Verdicker
12 bis 25 Gew.-Teile Melamin in Form des Melaminharzes
4 bis 21 Gew.-Teile Harnstoff in Form des Melaminharzes
12 bis 25 Gew.-Teile Formaldehyd in Form des Melaminharzes
4 bis 12 Gew.-Teile Organisches Füllmittel
3 bis 13 Gew.-Teile C₂- bis C₂₀-Polyole
0 bis 5 Gew.-Teile Modifizierungsmittel
0 bis 4 Gew.-Teile Resorcin
3 bis 9 Gew.-Teile Mineralisches Füllmittel
auf 100 Gew.-Teile Rest-Wasser

Die erfindungsgemäßen Zweikomponenten-Leimsysteme eignen sich vor allem zum Verleimen von Massivholzteilen. Besonders geeignet sind sie zur Herstellung von BS-Holz, das aus mehreren, bevorzugt 5 bis 70 Holzlamellen, z.B. Holzbrettern mit einer Dicke von 10 bis 43 mm, aufgebaut sind.

Die Verleimung der Holzlamellen erfolgt zweckmäßigerweise nach einem der in der Holzindustrie allgemein bekannten Verfahren.

Dabei kann man beispielsweise so vorgehen, daß man
Ia durch Vermischung der Komponenten (a) und (b) eine Leimflotte herstellt,
IIa beleimte Holzlamellen herstellt, indem man die Leimflotte einseitig oder beidseitig auf Holzlamellen aufträgt, und
IIIa die beleimten Holzlamellen miteinander oder mit unbeleimten Holzlamellen so in Kontakt bringt, daß sich eine Leimschicht zwischen je zwei zu verleimenden Holzlamellen befindet,
mit der Maßgabe, daß die Arbeitsschritte Ia bis IIIa innerhalb eines Zeitraums von 45 bis 150 min, bevorzugt von 60 bis 120 min durchgeführt werden,
oder
Ib beleimte Holzlamellen herstellt, indem man getrennt voneinander die Komponenten (a) und (b) einseitig oder beidseitig auf Holzlamellen aufträgt, so daß sowohl Komponente (a) als auch Komponente (b) auf beiden Seiten oder einer Seite der Holzlamelle aufgetragen ist, und
IIb die beleimten Holzlamellen miteinander oder mit unbeleimten Holzlamellen so in Kontakt bringt, daß sich die beiden Leimkomponenten zwischen jeweils 2 Holzlamellen befinden,
oder
Ic beleimte Holzlamellen herstellt, indem man getrennt voneinander die Komponenten (a) und (b) einseitig oder beidseitig auf Holzlamellen aufträgt, so daß sich nur jeweils eine Komponente des Zweikomponenten-Leimsystems auf der gleichen Seite einer Holzlamelle befindet, und
IIc die beleimten Holzlamellen miteinander so in Kontakt bringt, daß sich jeweils beide Komponenten (a) und (b) zwischen 2 zu verleimenden Holzlamellen befinden.

Beim getrennten Auftragen der Komponenten (a) und (b) werden pro Flächeneinheit in Schritt IIb oder IIc Komponente (a) zu (b) im Verhältnis 0,2:1,0 bis 0,5:1,0, bevorzugt 0,3:1,0 bis 0,4:1,0, auf die Holzlamellen aufgetragen.

Die Gesamtmenge an Komponente (a) und (b) bzw. an Leimflotte, die in den Schritten IIb, IIc bzw. Ia auf die Holzlamellen aufgebracht wird, beträgt üblicherweise 350 bis 500 g/m².

Das Miteinander-in-Kontakt-bringen der mit der Leimflotte bzw. den einzelnen Komponenten beschichteten Holzlamellen gemäß Schritt IIIa, IIb bzw. IIc erfolgt im allgemeinen unter Anwendung eines Drucks von 0,6 bis 1,0 N/mm². Dieser Druck wird im allgemeinen für die Zeitdauer, die der Leim zum Aushärten benötigt, was nach ca. 112 - 14 h bei 20°C der Fall ist, aufrecht erhalten. Die Aushärtung wird üblicherweise bei Raumtemperatur vorgenommen, bei höheren Temperaturen verkürzt sich die Aushärtezeit entsprechend.

Die Leimflotten zeichnen sich insbesondere durch eine Gebrauchsfähigkeit nach ihrer Herstellung, d.h. dem Vermischen dere Komponenten (a) und (b) aus. Sie zeichnen sich weiterhin durch vorteilhafte rheologische Eigenschaften aus. Aufgrund ihrer Strukturviskosität und Thixotropie laufen sie nicht an senkrecht stehenden beleimten Holzlamellen herunter und ziehen keine Fäden.

Insbesondere verfügen die mit dem erfindungsgemäßen Zweikomponenten-Leimsystem hergestellten BS-Hölzer über ausgezeichnete mechanische Eigenschaften, die auch in der Außenanwendung erhalten bleiben.

### Beispiele

### Herstellung der Härtermischungen

### Härtermischung 1

4000 g einer 10-%igen Polyvinylalkohol-Lösung, 642 g Wasser, 1058 g 85-%ige Ameisensäure, 200 g Propylencarbonat, 600 g Resorcin, 3000 g China Clay und 500 g Cellulosefaser wurden nacheinander unter Rühren mit einem schnelldrehenden Rührer innig vermischt und gründlich homogenisiert.

Der fertige Härter hatte folgende Kenndaten:

| | |
|---|---|
| Dichte bei 20°C [g/ml] | 1,315 |
| Viskosität bei 20°C, Scherung 30/s [mPa•s] | 4802 |
| pH-Wert bei 20°C, gemessen mit Glaselektrode | 1,3. |

### Härtermischung 2

5320 g einer 10,6-%igen Polyvinylalkohol-Lösung, 239 g Wasser, 941 g 85-%ige Ameisensäure, 3000 g China Clay und 500 g Cellulosefaser wurden nacheinander unter Rühren mit einem schnelldrehenden Rührer innig vermischt und gründlich homogenisiert.

Der fertige Härter hatte folgende Kenndaten:

| | |
|---|---|
| Dichte bei 20°C [g/ml] | 1,265 |
| Viskosität bei 20°C, Scherung 30/s [mPa•s] | 5659 |
| pH-Wert bei 20°C, gemessen mit Glaselektrode | 1,4. |

### Herstellung der Melaminharze

### Melaminharz A

Eine Mischung aus 2515 g (33,5 mol) einer 40%igen Formaldehydlösung, 2575 g eines Harnstoff-Formaldehyd-Vorkondensats (10,7 mol Harnstoff und 42,9 mol Formaldehyd), 300 g Wasser, 15 g Diethylethanolamin und 2380 g (18,9 mol) Melamin wurden auf 95°C erhitzt und 75 Minuten bei dieser Temperatur kondensiert. Danach wurde auf 87°C abgekühlt und bis zu einer Viskosität von ca. 900 mPa•s (gemessen bei 20°C) weiterkondensiert. Der pH-Wert wurde über die gesamte Kondensationsdauer bei ca. 9,5 konstant gehalten. Nach dem Abkühlen auf 50°C wurden 415 g (6,9 mol) Harnstoff zugesetzt und weiter auf Raumtemperatur abgekühlt. Die Viskosität der Mischung betrug 715 mPa•s (gemessen bei 20°C) und hatte einen Feststoffgehalt von 62,5 Gew.-%. In dieses Harz wurden 100 g Caprolactam, 600 g Ethylenglykol sowie 850 g Cellulose homogen eingerührt.

Das fertige Harz hatte folgende Kenndaten:

| | |
|---|---|
| Viskosität | 2480 mPa•s |
| Feststoffgehalt | 65,2 Gew.-% |
| pH-Wert | 9,2 |
| Gelierzeit (3 g 34%ige Ameisensäure, 40°C) | 55 Minuten. |

### Melaminharz B

Eine Mischung aus 2515 g (33,5 mol) einer 40%igen Formaldehydlösung, 2575 g eines Harnstoff-Formaldehyd-Vorkondensats (10,7 mol Harnstoff und 42,9 mol Formaldehyd), 300 g Wasser, 15 g Diethylethanolamin und 2380 g (18,9 mol) Melamin wurden auf 93°C erhitzt und 90 Minuten bei dieser Temperatur bis zu einer Viskosität von ca. 600 mPa•s (gemessen bei 20°C) kondensiert. Der pH-Wert wurde über die gesamte Kondensationsdauer konstant gehalten. Nach dem Abkühlen auf 50°C wurden 415 g (6,9 mol) Harnstoff zugesetzt und weiter auf Raumtemperatur abgekühlt. Die Viskosität der Mischung betrug 548 mPa•s (gemessen bei 20°C) und hatte einen Feststoffgehalt von 62,4 Gew.-%. In dieses Harz wurden 850 g Diethylenglykol sowie 950 g Cellulose homogen eingerührt.

Das fertige Harz hatte folgende Kenndaten:

| | |
|---|---|
| Viskosität | 2380 mPa•s |
| Feststoffgehalt | 65,6 Gew.-% |
| pH-Wert | 9,1 |
| Gelierzeit (3 g 34%ige Ameisensäure, 40°C) | 58 Minuten. |

### Melaminharz C

Eine Mischung aus 4550 g (60,7 mol) einer 40%igen Formaldehydlösung, 350 g eines Harnstoff-Formaldehyd-Vorkondensats (1,5 mol Harnstoff und 5,8 mol Formaldehyd), 15 g Diethylethanolamin und 2700 g (21,4 mol) Melamin wurden auf 97°C erhitzt und 90 Minuten bei dieser Temperatur bis zu einer Viskosität von ca. 580 mPa•s (gemessen bei 20°C) kondensiert. Der pH-Wert wurde über die gesamte Kondensationsdauer konstant gehalten. Nach dem Abkühlen auf 50°C wurden 438 g 7,3 mol) Harnstoff zugesetzt und weiter auf Raumtemperatur abgekühlt. Die Viskosität der Mischung betrug 450 mPa•s (gemessen bei 20°C) und hatte einen Feststoffgehalt von 59,1 Gew.-%. In dieses Harz wurden 200 g Caprolactam, 300 g 1,4-Butandiol, 500 g Ethylenglykol sowie 947 g Cellulose homogen eingerührt.

Das fertige Harz hatte folgende Kenndaten:

| | |
|---|---|
| Viskosität | 2270 mPa•s |
| Feststoffgehalt | 63,5 Gew.-% |
| pH-Wert | 9,4 |
| Gelierzeit (3 g 34%ige Ameisensäure, 40°C) | 42 Minuten. |

Die physikalischen Eigenschaften der Härtermischungen und der Melaminharze wurden auf folgende Weise ermittelt:
Die Viskositäten wurden nach DIN 53019 mit einem Rotationsviskosimeter bei 20°C gemessen. Die Feststoffgehalte wurden nach DIN 12605 gemessen, wobei 1 g der Substanz in ein flaches Wägegläschen mit 3,5 cm Durchmesser eingewogen und 2 h bei 1200C im Trockenschrank getrocknet wird.

Die pH-Messungen erfolgen nach DIN 53785/ISO 1148.

Zur Messung der Gelierzeit wurden 100 g Melaminharz mit 3 g eines 34 Gew.-% Ameisensäure gemischt und auf 40°C erwärmt. Die Gelierzeit ist die Zeit zwischen der Zugabe des Härters und dem Erstarren der Probe.

### Anwendungstechnische Prüfungen

Für anwendungstechnische Prüfungen wurde aus 100 Gew.-Teilen Melaminharz und 20 Gew.-Teilen Härtermischung eine homogen vermischte gebrauchsfertige Leimflotte hergestellt. Die Prüfungen erfolgten nach den Vorschriften der DIN 68141, Ausgabe Oktober 1969 sowie nach DIN EN 391, Ausgabe November 1990 in Verbindung mit DIN EN 386, Ausgabe November 1990. Es wurden im einzelnen geprüft:
- Prüfung I: Gebrauchsdauer, DIN 68141 Absatz 2.1.2
- Prüfung II: Offene Antrockenzeit, DIN 68141 Absatz 2.1.3
- Prüfung III: Einfluß der Fugendicke und unterschiedlicher Lagerungsfolgen auf die Bindefestigkeit, DIN 68141 Absätze 2.1.1 (A) und 2.2.3 (B)
- Prüfung IV: Einfluß des Raumklimas auf die Abbindegeschwindigkeit, DIN 68141 Absatz 2.3 a) nach 24 Stunden
- Prüfung V: Delaminierungsbeständigkeit, DIN pr EN 386
- Prüfung VI: Optische Beurteilung der Leimfugenfarbe und deren Nachdunkelungsverhalten.

Die Prüfungen wurden an folgenden Leimflotten durchgeführt:

### Leimflotte 1

### Melaminharz A mit Härtermischung 1

### Leimflotte 2

### Melaminharz C mit Härtermischung 2

### Leimflotte 3

Handelsübliches Phenol-Resorcin-Formaldehyd-Harz (Kauresin® Leim 460 flüssig der BASF AG) mit einem handelsüblichen Härter für Phenolharze auf Basis von Paraformaldehyd und geringen Mengen einer Carbonsäure (Kauresin® Härter 466 Pulver der BASF AG).

Die Ergebnisse der anwendungstechnischen Prüfungen können Tabellen 1 und 2 entnommen werden.

**Tabelle 1:**

| Bindefestigkeiten (N/mm²) von Verleimungen nach DIN 68141 mit unterschiedlicher Fugendicke nach Lagerungsfolgen DIN 53254, Ausgabe Januar 1987 | | | | | | | |
|---|---|---|---|---|---|---|---|
| Leimflotte | Prüfung III A Lagerungsfolge | | | Prüfung III B Lagerungsfolge | | | Prüfung IV |
| | 1 | 13 | 14 | 1 | 13 | 14 | |
| 1 | 10,16 | 6,67 | 10,14 | 8,90 | 6,21 | 7,84 | 6,26 |
| 2 | 10,39 | 7,08 | 9,38 | 8,40 | 6,22 | 6,91 | 5,26 |
| 3 | 11,30 | 8,11 | 10,94 | 11,22 | 6,84 | 9,02 | 5,24 |

**Tabelle 2:**

| Ergebnisse aus den Prüfungen der Gebrauchsdauer und offenen Antrockenzeit nach DIN 68141 sowie der Delaminierung nach DIN pr EN 391 und 386 und der optischen Beurteilung der Leimfugenfarbe | | | | | | |
|---|---|---|---|---|---|---|
| Leimflotte | Gebrauchsdauer (min) 20°C/65% r.L. | Offene Antrockenzeit (min) Auftrag 400 g/m² | | Delaminierung nach 3 Tagen | | Optische Beurteilung |
| | | Buche | Fichte | Gesamtfuge % | Einzelfuge % | |
| 1 | 105 | 120 | 130 | 2,4 | 10,4 | helle Leimfuge geringe Nachdunkelung |
| 2 | 120 | 167 | 150 | 0 | 0 | helle Leimfuge keine Nachdunkelung |
| 3 | 235 | 135 | 135 | 0 | 0 | dunkel rotbraun |

## Patentansprüche

1. Zweikomponenten-Leimsystem, das für die Herstellung von Brett-Schichtholz (BS-Holz) geeignet ist, bestehend aus
a) einer wässerigen Härtermischung (Komponente (a)), enthaltend
a1) 3 bis 15 Gew.-% einer Bronstedt-Säure
a2) 20 bis 40 Gew.-% eines mineralischen Füllstoffs
a3) 2 bis 8 Gew.-% eines Verdickungsmittels
a4) 40 bis 60 Gew.-% Wasser
und
b) einem Melaminharz (Komponente (b)).

2. Zweikomponenten-Leimsystem nach Anspruch 1, wobei die wässerige Härtermischung (a) zusätzlich einen organischen Füllstoff enthält.

3. Zweikomponenten-Leimsystem nach Anspruch 1 oder 2, wobei die Komponente (a) zusätzlich Resorcin enthält.

4. Zweikomponenten-Leimsystem nach den Ansprüchen 1 bis 3, enthaltend eine Komponente (b) aus
b1) Melamin
b2) 2,1 bis 8,4 mol Formaldehyd pro Mol Melamin
b3) 0 bis 1,0 mol einer weiteren Verbindung, die fähig ist, mit Formaldehyd in einer Polykondensations- oder -additionsreaktion zu reagieren, pro Mol Formaldehyd.

5. Verfahren zur Herstellung von aus Holzlamellen aufgebautem BS-Holz unter Verwendung des Zweikomponenten-Leimsystems nach den Ansprüchen 1 bis 4, dadurch gekennzeichnet, daß man
Ia durch Vermischung der Komponenten (a) und (b) eine Leimflotte herstellt,
IIa beleimte Holzlamellen herstellt, indem man die Leimflotte einseitig oder beidseitig auf Holzlamellen aufträgt, und
IIIa die beleimten Holzlamellen miteinander oder mit unbeleimten Holzlamellen so in Kontakt bringt, daß sich eine Leimschicht zwischen je zwei zu verleimenden Holzlamellen befindet,
mit der Maßgabe, daß die Arbeitsschritte Ia bis IIIa innerhalb eines Zeitraums von 45 bis 150 min durchgeführt werden.

6. Verfahren zur Herstellung von BS-Holz unter Verwendung eines Zweikomponenten-Leimsystems nach den Ansprüchen 1 bis 4, dadurch gekennzeichnet, daß man
Ib beleimte Holzlamellen herstellt, indem man getrennt voneinander die Komponenten (a) und (b) einseitig oder beidseitig auf Holzlamellen aufträgt, so daß sowohl Komponente (a) als auch Komponente (b) auf beiden Seiten oder einer Seite der Holzlamelle aufgetragen ist, und
IIb die beleimten Holzlamellen miteinander oder mit unbeleimten Holzlamellen so in Kontakt bringt, daß sich die beiden Leimkomponenten zwischen jeweils 2 Holzlamellen befinden.

7. Verfahren zur Herstellung von BS-Holz unter Verwendung eines Zweikomponenten-Leimsystems nach den Ansprüchen 1 bis 4, dadurch gekennzeichnet, daß man
Ic beleimte Holzlamellen herstellt, indem man getrennt voneinander die Komponenten (a) und (b) einseitig oder beidseitig auf Holzlamellen aufträgt, so daß sich nur jeweils eine Komponente des Zweikomponenten-Leimsystems auf der gleichen Seite einer Holzlamelle befindet und
IIc die beleimten Holzlamellen miteinander so in Kontakt bringt, daß sich jeweils beide Komponenten (a) und (b) zwischen 2 zu verleimenden Holzlamellen befinden.

8. BS-Holz, erhältlich nach einem Verfahren nach den Ansprüchen 5 bis 7.

## Claims

1. A two-component adhesive system suitable for the production of glued laminated board (GL board), consisting of
a) an aqueous hardener mixture (component (a)) comprising
a1) 3-15% by weight of a Bronstedt acid
a2) 20-40% by weight of a mineral filler
a3) 2-8% by weight of a thickener
a4) 40-60% by weight of water
and
b) a melamine resin (component (b)).

2. A two-component adhesive system as claimed in claim 1, wherein the aqueous hardener mixture (a) additionally comprises an organic filler.

3. A two-component adhesive system as claimed in claim 1 or 2, wherein component (a) additionally comprises resorcinol.

4. A two-component adhesive system as claimed in any of claims 1 to 3, comprising a component (b) comprising
b1) melamine
b2) 2.1-8.4 mol of formaldehyde per mole of melamine
b3) 0-1.0 mol per mole of formaldehyde of a further compound which is capable of reacting with formaldehyde in a polycondensation or polyaddition reaction.

5. A process for producing GL board constructed from layers of wood using a two-component adhesive system as claimed in any of claims 1 to 4, wherein
Ia a liquid adhesive mass is prepared by mixing components (a) and (b),
IIa glued layers of wood are produced by applying the liquid adhesive mass to one or both sides of layers of wood, and
IIIa the glued layers of wood are brought into contact with one another, or with layers of wood to which no glue has been applied, in such a way that there is a layer of glue between each two layers of wood to be glued together,
with the proviso that operations Ia to IIIa are carried out within a period of 45-150 minutes.

6. A process for producing GL board using a two-component adhesive system as claimed in any of claims 1 to 4, wherein
Ib glued layers of wood are produced by applying components (a) and (b) separately from one another to one or both sides of layers of wood, so that both component (a) and component (b) are applied to both sides or one side of the layer of wood, and
IIb the glued layers of wood are brought into contact with one another, or with layers of wood to which no glue has been applied, in such a way that the two adhesive components are in each case between two layers of wood.

7. A process for producing GL board using a two-component adhesive system as claimed in any of claims 1 to 4, wherein
Ic glued layers of wood are produced by applying components (a) and (b) separately from one another to one or both sides of layers of wood, so that in each case only one component of the two-component adhesive system is present on a single side of a layer of wood, and
IIc the glued layers of wood are brought into contact with one another in such a way that in each case both components (a) and (b) are between two layers of wood to be glued together.

8. GL board obtainable by a process as claimed in any of claims 5 to 7.

## Revendications

1. Système d'adhésif à deux composants, adapté pour la fabrication de panneaux en bois lamellé (bois BS), constitué
a) d'un mélange aqueux durcissant (composant (a)), contenant
a1) 3-15% en poids d'un acide de Bronstedt,
a2) 20-40% en poids d'une charge minérale,
a3) 2-8% en poids d'un agent épaississant,
a4) 40-60% en poids d'eau
et
b) d'une résine mélamine (composant (b)).

2. Système d'adhésif à deux composants selon la revendication 1, où le mélange aqueux durcissant (a) contient en outre une charge organique.

3. Système d'adhésif à deux composants selon la revendication 1 ou 2, où le composant (a) contient en outre de la résorcine.

4. Système d'adhésif à deux composants selon l'une quelconque des revendications 1 à 3, contenant un composant (b) constitué
b1) de mélamine,
b2) de 2,1-8,4 moles de formaldéhyde par mole de mélamine,
b3) de 0-1,0 mole, par mole de formaldéhyde, d'un autre composé susceptible de réagir avec le formaldéhyde dans une réaction de polycondensation ou de polyaddition.

5. Procédé de fabrication de bois BS construit à partir de lamelles de bois, utilisant le système d'adhésif à deux composants selon l'une quelconque des revendications 1 à 4, caractérisé en ce que
la l'on prépare un bain d'adhésif par mélange des composants (a) et (b),
lla on prépare des lamelles de bois encollées en déposant le bain d'adhésif sur des lamelles de bois sur un ou deux côtés, et
IIIa on met en contact les lamelles de bois encollées entre elles ou avec des lamelles de bois non encollées, de sorte qu'une couche de colle soit présente entre chaque paire de lamelles de bois à coller,
étant spécifié que les étapes la à IIIa sont effectuées dans un intervalle de temps de 45 à 150 min.

6. Procédé de fabrication de bois BS utilisant le système d'adhésif à deux composants selon l'une quelconque des revendications 1 à 4, caractérisé en ce que
Ib on prépare des lamelles de bois encollées en déposant séparément les composants (a) et (b) sur un ou deux côtés des lamelles de bois, de sorte que aussi bien le composant (a) que le composant (b) sont déposés sur un côté ou sur les deux côtés des lamelles de bois, et
IIb on met en contact les lamelles de bois encollées entre elles ou avec des lamelles de bois non encollées, de sorte que les deux composants de l'adhésif soit à chaque fois présents entre deux lamelles de bois à coller.

7. Procédé de fabrication de bois BS utilisant le système d'adhésif à deux composants selon l'une quelconque des revendications 1 à 4, caractérisé en ce que
Ic on prépare des lamelles de bois encollées en déposant séparément les composants (a) et (b) sur un ou deux côtés des lamelles de bois, de sorte qu'un seul des composants du système d'adhésif à deux composants se trouve sur le même côté d'une lamelle de bois, et
llc on met en contact les lamelles de bois encollées entre elles, de sorte qu'à chaque fois, les deux composants (a) et (b) soient présents entre deux lamelles de bois à coller.

8. Bois BS pouvant être obtenu par un procédé selon l'une quelconque des revendications 5 à 7.
